# EUROPEAN PATENT APPLICATION

(11) **EP 4 608 055 A1**
(43) Date of publication of application: **27.08.2025**
(21) Application number: 22962297.2
(22) Date of filing: 17.10.2022
(51) Int. Cl.: H04W 76/15

(54) **COMMUNICATION METHOD, ELECTRONIC DEVICE AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Gunzelmann, Rainer
(86) International application number: PCT/CN2022/125714
(87) International publication number: WO 2024/082099

(57) **Abstract**

Embodiments of the present disclosure relate to the technical field of mobile communications, and provide a communication method, an electronic device and a storage medium. The communication method is applied to a multi-connection access point device AP MLD, and the method comprises: determining a first target wake-up time (TWT) establishment frame, wherein the first TWT establishment frame comprises one or more TWT elements; and sending the first TWT establishment frame under a communication link with a multi-connection station device Non-AP MLD, wherein each TWT element corresponds to one communication link. The embodiments of the present disclosure provide a TWT implementation mode.

## Description

### TECHNICAL FIELD

The embodiments of the disclosure relate to the field of mobile communication technology. In detail, the embodiments of the disclosure relate to a communication method, an electronic device and a storage medium.

### BACKGROUND

With the rapid development of mobile communication technologies, the Wireless Fidelity (Wi-Fi) technology has made significant progress in terms of transmission rate and throughput. At present, the research contents of the Wi-Fi technology include, for example, 320MHz bandwidth transmission, aggregation and coordination of multiple frequency bands, and the like, with primary application scenarios such as video transmission, augmented reality (AR), and virtual reality (VR).

In detail, the aggregation and coordination of multiple frequency bands refers to a scenario where devices can communicate with each other on 2.4GHz, 5.8GHz, 6GHz and other frequency bands. For the scenario where devices communicate with each other on multiple frequency bands, a new media access control (MAC) mechanism needs to be defined for management. In addition, the aggregation and coordination of multiple frequency bands is expected to be able to support low-latency transmission.

In the Wi-Fi technology studied currently, in order to further reduce power consumption of Wi-Fi networks and support energy-efficient operations for large-scale Internet of Things (IoT) devices, a target wake-up time (TWT) mechanism is proposed. Therefore, it is necessary to provide an implementation method for TWT to improve the TWT mechanism.

### SUMMARY

The embodiments of the disclosure provide a communication method, an electronic device and a storage medium to provide an implementation method for target wake-up time (TWT).

According to a first aspect of embodiments of the disclosure, a communication method is provided. The communication method is performed by an access point multi-link device (AP MLD), and includes:
determining a first TWT setup frame, in which the first TWT setup frame includes one or more TWT elements; and
sending the first TWT setup frame in one communication link with a non-AP MLD, in which each TWT element corresponds to one communication link.

According to a second aspect of embodiments of the disclosure, a communication method is provided. The communication method is performed by a non-AP MLD, and includes:
determining a second TWT setup frame that includes one or more TWT elements; and
sending the second TWT setup frame in one communication link with an AP MLD, in which each TWT element corresponds to one communication link.

According to a third aspect of embodiments of the disclosure, an electronic device is provided. The electronic device is an AP MLD, and includes:
a first determining module, configured to determine a first TWT setup frame, in which the first TWT setup frame includes one or more TWT elements; and
a first sending module, configured to send the first TWT setup frame in one communication link with a non-AP MLD, in which each TWT element corresponds to one communication link.

According to a fourth aspect of embodiments of the disclosure, an electronic device is provided. The electronic device is a non-AP MLD, and includes:
a second determining module, configured to determine a second TWT setup frame, in which the second TWT setup frame includes one or more TWT elements; and
a second sending module, configured to send the second TWT setup frame in one communication link with an AP MLD, in which each TWT element corresponds to one communication link.

According to a fifth aspect of embodiments of the disclosure, an electronic device is provided. The electronic device includes a memory, a processor and a computer program stored on the memory and executable by the processor. The processor implements the one or more methods in the embodiments of the disclosure when executing the program.

The embodiment of the disclosure also provide a computer-readable storage medium. The computer-readable storage medium stores a computer program, and the processor implements the one or more methods in the embodiments of the disclosure when executing the computer program.

In the embodiment of the disclosure, the first TWT setup frame is determined. The first TWT setup frame includes one or more TWT elements. The first TWT setup frame is sent in one communication link with a non-AP MLD, to improve the TWT mechanism in a multi-link scenario.

Additional aspects and advantages of the embodiments of disclosure will be given in part in the following description, become apparent in part from the following description, or be learned from the practice of the disclosure.

### BRIEF DESCRIPTION OF THE DRAWINGS

In order to clearly illustrate technical solutions of embodiments of the disclosure, the following will briefly introduce drawings required in the description of the embodiments of the disclosure. It is evident that the drawings in the following description are only represent some embodiments of the disclosure. For those skilled in the art, other drawings may be obtained according to these drawings without inventive works.
FIG. 1 is a first flowchart of a communication method according to an embodiment of the disclosure.
FIG. 2 is a schematic diagram of a first example of an embodiment of the disclosure.
FIG. 3 is a second flowchart of a communication method according to an embodiment of the disclosure.
FIG. 4 is a first schematic diagram of an electronic device according to an embodiment of the disclosure.
FIG. 5 is a second schematic diagram of an electronic device according to an embodiment of the disclosure.
FIG. 6 is a third schematic diagram of an electronic device according to an embodiment of the disclosure.

### DETAILED DESCRIPTION

In embodiments of the disclosure, the term "and/or" describes an association relation between associated objects, which indicates three relations, for example, "A and/or B" may represent: A existing alone, both A and B existing, or B existing alone. The character "/" generally represents that the associated objects prior to and after the character "/" is in an "or" relation.

The term "a plurality of" in embodiments of the disclosure refers to two or more, which is the similar for other quantifiers.

Exemplary embodiments will be described in detail herein, examples of which are illustrated in drawings. Unless otherwise represented in the following description, the same numbers in different drawings refer to the same or similar elements. The implementations described in the following exemplary embodiments do not represent all implementations consistent with the disclosure. Instead, they are merely examples of apparatuses and methods consistent with aspects related to the disclosure as detailed in the appended claims.

The terms used in the disclosure are only for the purpose of describing specific embodiments, and are not intended to limit the disclosure. The singular forms of "a", "the" and "this" used in the disclosure and the appended claims are also intended to include plural forms, unless the context clearly indicates other meanings. It is understood that the term "and/or" as used herein refers to and includes any or all possible combinations of one or more associated listed items.

It is understandable that although the terms "first", "second", and "third" may be used in the disclosure to describe various information, such information should not be limited by these terms. These terms are only used to distinguish information of the same type from each other. For example, without departing from the scope of the disclosure, first information may also be referred to as second information, and similarly, second information may also be referred to as first information. Depending on the context, the word "if" as used herein may be interpreted as "when", "while" or "in response to determining".

The technical solutions in embodiments of the disclosure will be described clearly and completely below in combination with the drawings in the embodiments of the disclosure. It is apparent that the described embodiments are merely same rather than all of the embodiments of the disclosure. Based on the embodiments of the disclosure, other embodiments obtained by those skilled in the art without inventive works all fall within the scope of protection of the disclosure.

The embodiments of the disclosure provide a communication method, an electronic device and a storage medium, to provide an implementation for target wake-up time (TWT).

The method and the apparatus are based on the same application conception. Since principles for solving problems by the method and the apparatus are similar, the implementations of the apparatus and the method may refer to each other, and repeated contents will not be elaborated.

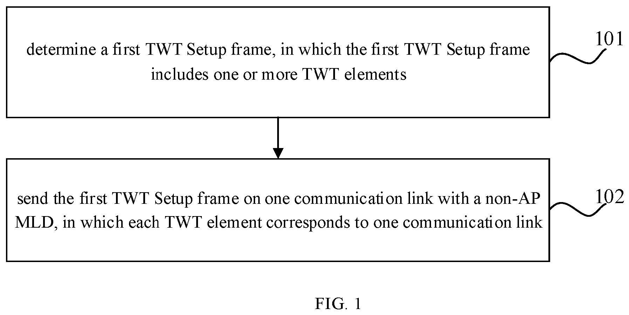

As illustrated in FIG. 1, the embodiment of the disclosure provides a communication method. Optionally, the method may be performed by an electronic device, and the electronic device may be an access point multi-link device (AP MLD). The method includes the following steps.

At step 101, a first TWT setup frame is determined, in which the first TWT setup frame comprises one or more TWT elements.

In a multi-link scenario, a station (STA) negotiates with an access point (AP) through a TWT mechanism to establish a time table, and each STA has a separate TWT time period and a wake-up time. When the TWT time period negotiated between the STA and the AP arrives, the STA switches from a doze state to an active state, and then exchanges data with the AP. When the current transmission is completed, the STA switches back to the doze state.

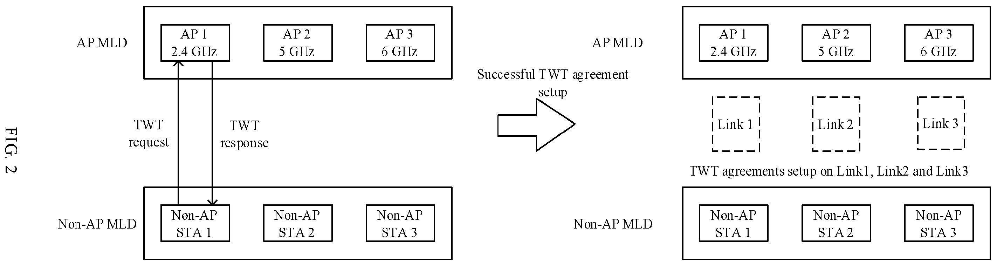

As a first example, as illustrated in FIG. 2, a setup scenario where a multi-link TWT agreement is set up between a STA MLD (i.e. non-AP MLD) and an AP MLD according to the embodiment of the disclosure is introduced first. In this scenario, the AP MLD and the non-AP MLD have 3 affiliated APs and 3 affiliated STAs, respectively. AP1-STA1 corresponds to Link1 (which is a communication link (or a link)), AP2-STA2 corresponds to Link2, and AP3-STA3 corresponds to Link3. The three links operate in frequency bands of 2.4GHz, 5GHz and 6GHz, respectively.

A non-AP STA 1 affiliated to the non-AP MLD sends three TWT elements to an AP1 affiliated to the AP MLD in a TWT request. The three TWT elements correspond respectively to links with the AP1, an AP2 and an AP3, and request to set up a TWT agreement for the three links respectively.

In the embodiment of the disclosure, the AP MLD determines the first TWT setup frame that includes one or more TWT elements. That is, the AP MLD determines the links for which the TWT agreement needs to be set up, and then determines the TWT elements corresponding to each link. A plurality of TWT elements refers to two or more TWT elements.

At step 102, the first TWT setup frame is sent in one communication link with a non-AP MLD, in which each TWT element corresponds to one communication link.

The AP MLD sends the first TWT setup frame in one communication link with the non-AP MLD, i.e., the AP MLD sends TWT elements corresponding to one or more communication links with the non-AP MLD on one link, so as to set up the TWT agreement for one or more communication links simultaneously. When the first TWT setup frame includes a plurality of TWT elements, it is unnecessary to separately send a signaling message including the TWT element on each link, which may reduce signaling consumption, save network resources, and conserve device power consumption.

Continuing to refer to FIG. 2, the AP1 sends the first TWT setup frame (TWT response) on the Link1, which carries three TWT elements that correspond to the Link1, the Link2 and the Link3 respectively.

In the embodiment of the disclosure, the first TWT setup frame is determined. The first TWT setup frame includes one or more TWT elements. The first TWT setup frame is sent in one communication link with the non-AP MLD, thereby improving the TWT mechanism in the multi-link scenario.

The embodiment of the disclosure provides a communication method. Optionally, the method is performed by an AP MLD. The method includes:
sending a beacon frame and/or a probe response frame, in which the beacon frame and/or the probe response frame includes TWT parameters range support information (i.e. TWT Parameters Range Support), and when the TWT parameters range support information is set to a first parameter value, it indicates that the AP MLD supports for reception or transmission of at least two TWT elements;
determining a first TWT setup frame including one or more TWT elements; and
sending the first TWT setup frame in one communication link with a non-AP MLD, in which each TWT element corresponds to one communication link.

The AP MLD carries its TWT parameters range support information through the beacon frame and/or the probe response frame, to notify the non-AP MLD whether the AP MLD supports the TWT setup frame containing at least two TWT elements, that is, whether the AP MLD supports for reception or transmission of at least two TWT elements. When the TWT parameters range support information is set to the first parameter value, it indicates that the AP MLD supports for reception or transmission of at least two TWT elements. The first parameter value may be, for example, 1.

In an optional embodiment, the TWT parameters range support information is carried in an extended capabilities field of the beacon frame and/or the probe response frame.

As a second example, the TWT parameters range support information is carried in the 89th bit of the extended capabilities field, as shown in the following Table 1.

**Table 1**

| Bits order | Information | Notes |
|---|---|---|
| 89 | TWT Parameters Range Support | Set to 1 to indicate support for reception or transmission of a TWT setup frame that contains at least two TWT elements (see 10.47.9 (TWT parameter ranges(11ax))); otherwise, set to 0 |

The embodiment of the disclosure provides a communication method. Optionally, the method may be performed by an AP MLD. The method may include:
determining a first TWT setup frame including one or more TWT elements, in which the first TWT setup frame includes a TWT setup frame action field, and when the TWT setup frame action field includes a second parameter value, it indicates that the first TWT setup frame includes one or more TWT elements; and
sending the first TWT setup frame in one communication link with a non-AP MLD, in which each TWT element corresponds to one communication link.

When the TWT setup frame action field includes the second parameter value, it indicates that the first TWT setup frame includes one or more TWT elements. As a third example, as shown in the following Table 2, when the second parameter value is 4, it indicates that the first TWT setup frame includes one or more TWT elements.

**Table 2**

| Order | Information |
|---|---|
| 1 | Category |
| 2 | Unprotected S1G Action |
| 3 | Dialog Token |
| 4 | One or more TWT elements |

The embodiment of the disclosure provides a communication method. Optionally, the method may be performed by an AP MLD. The method includes:
determining a first TWT setup frame including one or more TWT elements, in which the TWT element includes first identification information, in which the first identification information indicates whether the TWT element is the last TWT element of the first TWT setup frame; and
sending the first TWT setup frame in one communication link with a non-AP MLD, in which each TWT element corresponds to one communication link.

The TWT element includes the first identification information. The first identification information, for example, may be a Last TWT element Indicator, which is used to identify whether the TWT element is the last TWT element of the first TWT setup frame. When the first TWT setup frame includes a plurality of TWT elements, the first identification information is used to determine whether the TWT element is the last TWT element of the first TWT setup frame.

Optionally, when the first identification information is set to 0, it indicates that the TWT element is not the last TWT element, so following this TWT element, there are other TWT elements in the TWT setup frame. Conversely, when the first identification information is set to 1, it indicates that the TWT element is the last TWT element.

In an optional embodiment, the first identification information is carried in a control field of the TWT element. As a fourth example, the control field of the TWT element is shown in the following table 3.

**Table 3**

| Contents | Null Data Packet (NDP) Paging Indicator | Respond er power manage ment (PM) Mode | Negotiation Type | TWT Informati on Frame Disabled | Wake Duratio n Unit | Link Identity (ID) Bitmap Presence | Last TWT element Indicator |
|---|---|---|---|---|---|---|---|
| Bits | 1 | 1 | 1 | 2 | 1 | 1 | 1 |
| Bits order | B0 | B1 | B2 to B3 | B4 | B5 | B6 | B7 |

B7 carries the Last TWT element Indicator (i.e. the first identification information).

In an optional embodiment, the method further includes:
receiving a second TWT setup frame in one communication link with the non-AP MLD;
in which the second TWT setup frame includes one or more TWT elements, and each TWT element corresponds to one communication link.

The AP MLD receives the second TWT setup frame sent by the non-AP MLD, in which the second TWT setup frame includes one or more TWT elements. The AP MLD determines, based on the second TWT setup frame, links for which the non-AP MLD needs to set up a TWT agreement, determines the TWT element corresponding to each link, and sets up the TWT agreement, so as to implement the TWT mechanism under the multi-link.

The embodiment of the disclosure provides a communication method. Optionally, the method may be performed by an AP MLD. The method includes:
determining a first TWT setup frame including one or more TWT elements, each TWT element includes first link identity (ID) indication information, and the first link ID indication information indicates a communication link corresponding to the TWT element; and
sending the first TWT setup frame in one communication link with a non-AP MLD, in which each TWT element corresponds to one communication link.

The first TWT setup frame includes one or more TWT elements, and each TWT element includes the first link ID indication information. The first link ID indication information, such as a Link ID Bitmap subfield, indicates the communication link corresponding to the TWT element.

Optionally, the Link ID Bitmap subfield may indicate a Link ID. For example, when the Link ID Bitmap subfield is "0001", it indicates that the Link ID of the communication link corresponding to this TWT element is "0001".

The embodiment of the disclosure provides a communication method. Optionally, the method may be performed by an AP MLD. The method may include:
determining a first TWT setup frame including one or more TWT elements, in which the first TWT setup frame includes second link ID indication information, and each ID bit of the second link ID indication information indicates a communication link corresponding to each TWT element; and
sending the first TWT setup frame in one communication link with a non-AP MLD, in which each TWT element corresponds to one communication link.

The first TWT setup frame includes one or more TWT elements, and each TWT element includes the second link ID indication information. The second link ID indication information, for example, may be a Link ID Bitmap subfield, and each ID bit of the second link ID indication information indicates the communication link corresponding to each TWT element.

For example, when the ID bit in the Link ID Bitmap subfield corresponding to a communication link is "1", it indicates that this communication link has an associated TWT element. When the ID bit in the Link ID Bitmap subfield corresponding to a communication link is "0", it indicates that this communication link has no associated TWT element.

In the embodiment of the disclosure, the AP MLD determines the first TWT setup frame, which includes one or more TWT elements. The first TWT setup frame is sent in one communication link with the non-AP MLD, thereby improving the TWT mechanism in the multi-link scenario.

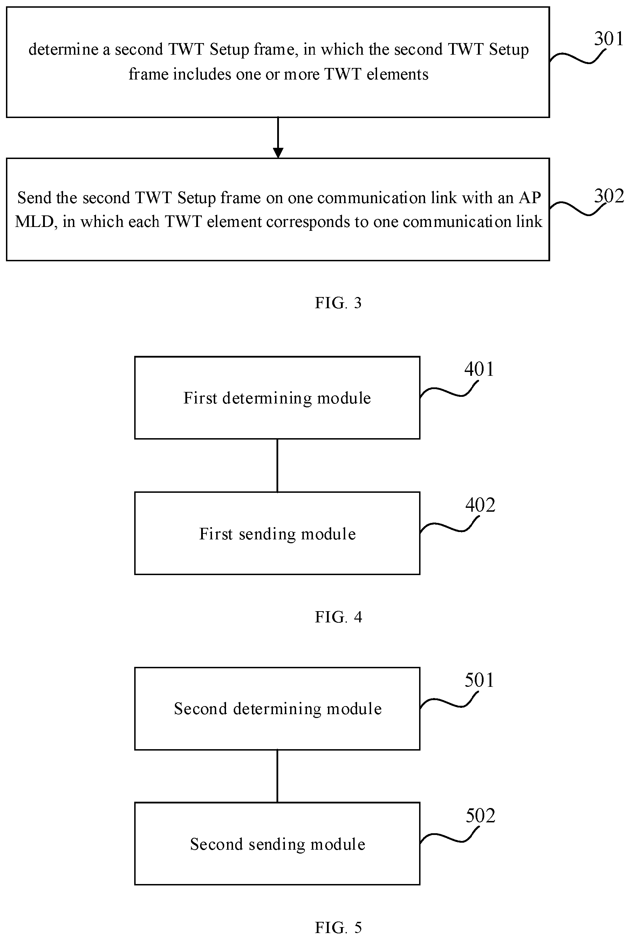

As illustrated in FIG. 3, the embodiment of the disclosure provides a communication method. Optionally, the method may be performed by an electronic device, which may be a non-AP MLD. The method may include the following steps.

At step 301, a second TWT setup frame is determined, in which the second TWT setup frame includes one or more TWT elements.

In a multi-link scenario, a STA negotiates with an AP through a TWT mechanism to establish a time table, and each STA has its separate TWT time period and wake-up time. When the TWT time period negotiated between the STA and the AP arrives, the STA switches from a doze state to an active state, and then exchanges data with the AP. When the current transmission is completed, the STA switches back to the doze state. The multi-link TWT agreement setup scenario provided in the embodiment of the disclosure may refer to the first example mentioned above, and will not be described here again.

The non-AP MLD determines the second TWT setup frame, in which the second TWT setup frame includes one or more TWT elements. That is, the AP MLD determines the links for which the TWT agreement needs to be set up, and then determines the TWT element corresponding to each link. A plurality of TWT elements refers to two or more TWT elements.

At step 302, the second TWT setup frame is sent in one communication link with an AP MLD, in which each TWT element corresponds to one communication link.

The non-AP MLD sends the second TWT setup frame in one communication link with the AP MLD, i.e., the non-AP MLD sends TWT elements corresponding to one or more communication links with the AP MLD on one link, so as to set up the TWT agreement for one or more communication links. When the first TWT setup frame includes a plurality of TWT elements, it is unnecessary to separately send a signaling message including the TWT element on each link, which may reduce signaling consumption, save network resources, and conserve device power consumption.

As illustrated in FIG. 2, the STA1 sends a first TWT setup frame (i.e., TWT request) on the Link1, in which the first TWT setup frame carries three TWT elements corresponding to Link1, Link2 and Link3 respectively.

In the embodiment of the disclosure, the non-AP MLD determines the second TWT setup frame, which includes one or more TWT elements. The second TWT setup frame is sent in one communication link with the AP MLD, thereby improving the TWT mechanism in the multi-link scenario.

The embodiment of the disclosure provides a communication method. Optionally, the method is performed by a non-AP MLD. The method includes:
sending an association request frame and/or a probe request frame, in which the association request frame and/or the probe request frame includes TWT parameters range support information (i.e. TWT Parameters Range Support), and when the TWT parameters range support is set to a third parameter value, it indicates that the non-AP MLD supports for reception or transmission of at least two TWT elements;
determining a second TWT setup frame including one or more TWT elements; and
sending the second TWT setup frame in one communication link with an AP MLD, in which each TWT element corresponds to one communication link.

The non-AP MLD carries its TWT parameters range support information through the association request frame and/or the probe request frame, to notify the AP MLD whether the non-AP MLD supports the second TWT setup frame containing at least two TWT elements, i.e., whether the non-AP MLD supports for reception or transmission of at least two TWT elements. When the TWT parameters range support information is set to the first parameter value, it indicates that the non-AP MLD supports for reception or transmission of at least two TWT elements. The first parameter value may be, for example, 1.

In an optional embodiment, the TWT parameters range support information is carried in an extended capability field of the association request frame and/or the probe request frame.

As a fifth example, the TWT parameters range support information is carried in the 89th bit of the extended capability field, as shown in Table 4 below.

**Table 4**

| Bits order | Information | Notes |
|---|---|---|
| 89 | TWT Parameters Range Support | Set to 1 to indicate support for reception or transmission of a TWT setup frame that contains at least TWO TWT elements (see 10.47.9 (TWT parameter ranges(11ax))); otherwise, set to 0 |

The embodiment of the disclosure provides a communication method. Optionally, the method may be performed by a non-AP MLD. The method includes:
determining a second TWT setup frame including one or more TWT elements, in which the second TWT setup frame includes a TWT setup frame action field, and when the TWT setup frame action field includes a second parameter value, it indicates that the second TWT setup frame includes one or more TWT elements; and
sending the second TWT setup frame in one communication link with an AP MLD, in which each TWT element corresponds to one communication link.

When the TWT setup frame action field includes the second parameter value, it indicates that the second TWT setup frame includes one or more TWT elements. As a sixth example, as shown in Table 5 below, when the second parameter value is 4, it indicates that the second TWT setup frame includes one or more TWT elements.

**Table 5**

| Order | Information |
|---|---|
| 1 | Category |
| 2 | Unprotected S1G Action |
| 3 | Dialog Token |
| 4 | One or more TWT elements |

The embodiment of the disclosure provides a communication method. Optionally, the method may be performed by a non-AP MLD. The method includes:
determining a second TWT setup frame including one or more TWT elements, in which the TWT element includes first identification information, and the first identification information indicates whether the TWT element is the last TWT element of the second TWT setup frame; and
sending the second TWT setup frame in one communication link with an AP MLD, in which each TWT element corresponds to one communication link.

The first TWT setup frame is sent in one communication link with a non-AP MLD, in which each TWT element corresponds to one communication link.

The TWT element includes the first identification information. The first identification information may be a Last TWT element Indicator, which is used to identify whether the TWT element is the last TWT element of the second TWT setup frame. When the second TWT setup frame includes a plurality of TWT elements, the first identification information is used to determine whether the TWT element is the last TWT element of the second TWT setup frame.

Optionally, when the first identification information is 0, it indicates that the TWT element is not the last TWT element, so following this TWT element, there are other TWT elements in the TWT setup frame. Conversely, when the first identification information is set to 1, it indicates that the TWT element is the last TWT element.

In an optional embodiment, the first identification information is carried in a control field of the TWT element. As a seventh example, the control field of the TWT element is shown in the following Table 6.

**Table 6**

| Contents | NDP Paging Indicat or | Responder PM (power management ) Mode | Negotiation Type | TWT Information Frame Disabled | Wake Duration Unit | Link ID Bitmap Presence | Last TWT element Indicator |
|---|---|---|---|---|---|---|---|
| Bits | 1 | 1 | 1 | 2 | 1 | 1 | 1 |
| Bits order | B0 | B1 | B2 to B3 | B4 | B5 | B6 | B7 |

B7 carries the Last TWT element Indicator (i.e. the first identification information.

In an optional embodiment, the method further includes:
receiving a first TWT setup frame in one communication link with the AP MLD;
in which the first TWT setup frame includes one or more TWT elements, and each TWT element corresponds to one communication link.

The non-AP MLD receives the first TWT setup frame sent by the AP MLD, in which the first TWT setup frame includes one or more TWT elements. The non-AP MLD determines, based on the first TWT setup frame, links for which the AP MLD needs to set up a TWT agreement, determines the TWT element corresponding to each link, and proposes the TWT agreement, so as to implement the TWT mechanism under the multi-link.

The embodiment of the disclosure provides a communication method. Optionally, the method may be performed by a non-AP MLD. The method includes:
determining a second TWT setup frame including one or more TWT elements, in which each TWT element includes first link ID indication information, the first link ID indication information indicates a communication link corresponding to the TWT element; and
sending the second TWT setup frame in one communication link with an AP MLD, in which each TWT element corresponds to one communication link.

The second TWT setup frame includes one or more TWT elements, and each TWT element includes the first link ID indication information. The first link ID indication information, such as a Link ID Bitmap subfield, indicates the communication link corresponding to the TWT element.

Optionally, the Link ID Bitmap subfield may indicate a Link ID. For example, when the Link ID Bitmap subfield is set to "0001", it indicates that the Link ID of the communication link corresponding to this TWT element is "0001".

The embodiment of the disclosure provides a communication method. Optionally, the method may be performed by a non-AP MLD. The method includes:
determining a second TWT setup frame including one or more TWT elements, in which the second TWT setup frame includes second link ID indication information, and each ID bit of the second link ID indication information indicates a communication link corresponding to each TWT element; and
sending the second TWT setup frame in one communication link with an AP MLD, in which each TWT element corresponds to one communication link.

The second TWT setup frame includes one or more TWT elements, and each TWT element includes the second link ID indication information. The second link ID indication information, for example, may be a Link ID Bitmap subfield, and each ID bit of the second link ID indication information indicates the communication link corresponding to each TWT element.

For example, when the ID bit in the Link ID Bitmap subfield corresponding to a communication link is "1", it indicates that this communication link has an associated TWT element. When the ID bit in the Link ID Bitmap subfield corresponding to a communication link is "0", it indicates that this communication link has no associated TWT element.

In the embodiment of the disclosure, the non-AP MLD determines the second TWT setup frame that includes one or more TWT elements. The second TWT setup frame is sent in one communication link with the AP MLD, thereby improving the TWT mechanism in the multi-link scenario.

As illustrated in FIG. 4, based on the same principle as the method provided by the embodiment of the disclosure, the embodiment of the disclosure also provides an electronic device. The electronic device is an AP MLD, and includes:
a first determining module 401, configured to determine a first TWT setup frame, in which the first TWT setup frame includes one or more TWT elements; and
a first sending module 402, configured to send the first TWT setup frame in one communication link with a non-AP MLD, in which each TWT element corresponds to one communication link.

In an optional embodiment, the electronic device further includes:
a third sending module, configured to send a beacon frame and/or a probe response frame, in which the beacon frame and/or the probe response frame includes TWT parameters range support information;
in which, the TWT parameters range support information being set to a first parameter value indicates that the AP MLD supports for reception or transmission of at least two TWT elements.

In an optional embodiment, the TWT parameters range support information is carried in an extended capabilities field of the beacon frame and/or the probe response frame.

In an optional embodiment, the first TWT setup frame includes a TWT setup frame action field,
and the TWT setup frame action field including a second parameter value indicates that the first TWT setup frame includes one or more TWT elements.

In an optional embodiment, the TWT element includes first identification information,
in which the first identification information indicates whether the TWT element is the last TWT element of the first TWT setup frame.

In an optional embodiment, the first identification information is carried in a control field of the TWT element.

In an optional embodiment, the electronic device further includes:
a third receiving module, configured to receive a second TWT setup frame in one communication link with the non-AP MLD;
in which the second TWT setup frame includes one or more TWT elements, and each TWT element corresponds to one communication link.

In an optional embodiment, each TWT element includes first link ID indication information, and the first link ID indication information indicates a communication link corresponding to the TWT element;
or,
the first TWT setup frame includes second link ID indication information, and each ID bit of the second link ID indication information indicates a communication link corresponding to each TWT element.

In the embodiment of the disclosure, the first determining module 401 determines the first TWT setup frame that includes one or more TWT elements. The first sending module 402 sends the first TWT setup frame in one communication link with the non-AP MLD, so as to improve the TWT mechanism in the multi-link scenario.

The embodiment of the disclosure also provides a communication apparatus, which is applied to an AP MLD. The communication apparatus includes:
a first frame determining module, configured to determine a first TWT setup frame, in which the first TWT setup frame includes one or more TWT elements; and
a first frame sending module, configured to send the first TWT setup frame in one communication link with a non-AP MLD, in which each TWT element corresponds to one communication link.

The apparatus also includes other modules of the electronic device in the aforementioned embodiment, which will not be described in detail here.

As illustrated in FIG. 5, based on the same principle as the method provided by the embodiment of the disclosure, the embodiment of the disclosure also provides an electronic device. The electronic device is a non-AP MLD, and includes:
a second determining module 501, configured to determine a second TWT setup frame, in which the second TWT setup frame includes one or more TWT elements; and
a second sending module 502, configured to send the second TWT setup frame in one communication link with an AP MLD, in which each TWT element corresponds to one communication link.

In an optional embodiment, the electronic device further includes:
a fourth sending module, configured to send an association request frame and/or a probe request frame, in which the association request frame and/or the probe request frame include(s) TWT parameters range support information;
in which, the TWT parameters range support information being set to a third parameter value indicates that the non-AP MLD supports for reception or transmission of at least two TWT elements.

In an optional embodiment, the TWT parameters range support information is carried in an extended capabilities field of the association request frame and/or the probe request frame.

In an optional embodiment, the second TWT setup frame includes a TWT setup frame action field,
and when the TWT setup frame action field includes a second parameter value, it indicates that the second TWT setup frame includes one or more TWT elements.

In an optional embodiment, the TWT element includes first identification information,
and the first identification information indicates whether the TWT element is the last TWT element of the second TWT setup frame.

In an optional embodiment, the first identification information is carried in a control field of the TWT element.

In an optional embodiment, the electronic device further includes:
a fourth receiving module, configured to receive a first TWT setup frame in one communication link with the AP MLD;
in which the first TWT setup frame includes one or more TWT elements, and each TWT element corresponds to one communication link.

In an optional embodiment, each TWT element includes first link ID indication information, and the first link ID indication information indicates the communication link corresponding to the TWT element;
or,
the second TWT setup frame includes second link ID indication information, and each ID bit of the second link ID indication information indicates the communication link corresponding to each TWT element.

In the embodiment of the disclosure, the second determining module 501 determines the second TWT setup frame that includes one or more TWT elements. The second sending module 502 sends the second TWT setup frame in one communication link with the AP MLD, so as to improve the TWT mechanism in the multi-link scenario.

The embodiment of the disclosure also provides a communication apparatus, which is applied to a non-AP MLD. The communication apparatus includes:
a second frame determining module, configured to determine a second TWT setup frame; in which the second TWT setup frame includes one or more TWT elements; and
a second frame sending module, configured to send the second TWT setup frame in one communication link with an AP MLD, in which each TWT element corresponds to one communication link.

The apparatus also includes other modules of the electronic device in the aforementioned embodiment, which will not be described in detail here.

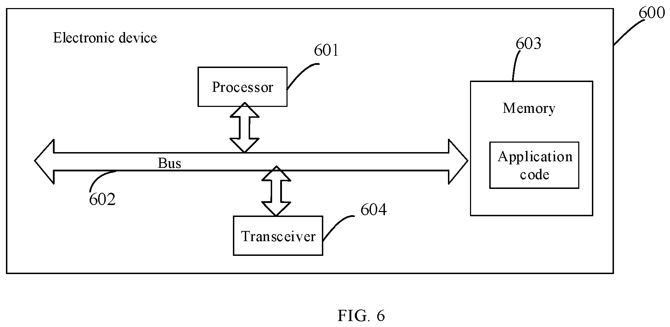

In an optional embodiment, the embodiment of the disclosure also provides an electronic device. As illustrated in FIG. 6, the electronic device 600 shown in FIG. 6 may be a server, which includes: a processor 601 and a memory 603. The processor 601 is connected to the memory 603, for example, via a bus 602. Optionally, the electronic device 600 may also include a transceiver 604. It should be noted that there may be one or more transceivers 604 in practical applications, and the structure of the electronic device 600 does not constitute a limitation of the embodiments of the disclosure.

The processor 601 may be a Central Processing Unit (CPU), a general purpose processor, a Digital Signal Processor (DSP), an Application Specific Integrated Circuit (ASIC), a Field Programmable Gate Array (FPGA) or other programmable logic components, transistor logic components, hardware components, or any combination thereof. The processor 601 may implement or execute various exemplary logic boxes, modules, and circuits described in combination with the contents disclosed in the disclosure. The processor 601 may also be a combination that implements a computing function, for example, a combination consisting of one or more microprocessors, or a combination consisting of DSPs and microprocessors.

The bus 602 may include a pathway to transfer information among the above components. The bus 602 may be a Peripheral Component Interconnect (PCI) bus or an Extended Industry Standard Architecture (EISA) bus. The bus 602 may be categorized as an address bus, a data bus, a control bus, and the like. For ease of representation, the bus 602 is represented by only one thick line in FIG. 6, but it does not indicate that there is only one bus or one type of bus.

The memory 603 may be a Read Only Memory (ROM) or other types of static storage devices for storing static information and instructions, a Random Access Memory (RAM) or other types of dynamic storage devices for storing information and instructions, an Electrically Erasable Programmable Read Only Memory (EEPROM), a Compact Disc Read Only Memory (CD-ROM) or other optical disc memories, optical disk memories (including compact disc, laser disc, optical disk, digital general disc, and Blu-ray disc), disk storage mediums or other magnetic storage devices, or any other mediums that may be used to carry or store expected program codes in the form of instructions or data structures and may be accessed by a computer, which is not limited herein.

The memory 603 is configured to store application codes for executing the solution of the disclosure, and the execution is controlled by the processor 601. The processor 601 is configured to execute the application codes stored in the memory 603 to implement the contents shown in the foregoing method embodiments.

The electronic device includes but is not limited to: a mobile phone, a notebook computer, a digital broadcast receiver, a personal digital assistant (PDA), a PAD, a portable multimedia player (PMP), a vehicle-mounted terminal (e.g., vehicle-mounted navigation terminal) and other mobile terminals, and fixed terminals such as a digital TV and a desktop computer. The electronic device shown in FIG. 6 is only an example and should not impose any limitation on the functions and scope of use of the embodiments of the disclosure.

The server provided by the disclosure may be a standalone physical server, a server cluster or a distributed system comprising multiple physical servers, or a cloud server providing basic cloud computing services such as cloud services, cloud database, cloud computing, cloud functions, cloud storage, network services, cloud communication, middleware services, domain name services, security services, Content Distribution Network (CDN), and big data and artificial intelligence platforms. The terminal may include, but is not limited to, a smartphone, a tablet, a laptop, a desktop computer, a smart speaker, and a smart watch. The terminal and the server may be connected directly or indirectly in a wired or wireless manner, which is not limited in the disclosure.

The embodiments of the disclosure provide a computer-readable storage medium. The computer-readable storage medium stores a computer program, and a computer is caused to execute the corresponding contents of the foregoing method embodiments when running the computer program.

It should be understood that although various steps in the flowchart of the accompanying drawings are shown in sequence as indicated by arrows, these steps are not necessarily performed in the order indicated by the arrows. Unless explicitly stated in this article, the execution of these steps is not strictly limited in order, and they may be performed in any other order. Moreover, at least some of the steps in the flowchart of the accompanying drawings may include multiple sub-steps or stages. These sub-steps or stages are not necessarily executed at the same time, and they may be executed at different moments. The order of execution is not necessarily sequential, the steps may be executed in turn or alternately with other steps or at least a portion of sub-steps or stages of other steps.

It is noted that the computer-readable medium described above in the disclosure may be a computer-readable signal medium, a computer-readable storage medium or a combination of both. The computer-readable storage medium may include, but is not limited to, an electrical, magnetic, optical, electromagnetic, infrared, or semiconducting system, apparatus or device, or any combination thereof. More specific examples of the computer-readable storage medium include, but are not limited to, electrical connections having one or more wires, portable computer disks, hard disks, RAMs, ROMs, Erasable Programmable Read Only Memories (EPROMs or flash memories), optical fibers, portable CD-ROMs, optical storage devices, magnetic memory devices, or any suitable combination thereof. In the disclosure, the computer - readable storage medium may be any tangible medium containing or storing programs that may be used by or in combination with an instruction execution system, apparatus or device. In the disclosure, a computer-readable signal medium may include a data signal propagated in a baseband or as part of a carrier that carries computer-readable program codes. The propagated data signal may take a variety of forms, which includes, but is not limited to, an electromagnetic signal, an optical signal, or any suitable combination thereof. The computer-readable signal medium may also be any computer-readable medium other than the computer-readable storage medium. The computer-readable signal medium may send, propagate, or transmit a program that may be used by or in combination with an instruction execution system, apparatus, or device. The program code stored on the computer-readable medium may be transmitted using any suitable medium, which includes, but is not limited to: wire, fiber optic cable, Radio Frequency (RF), or any suitable combination thereof.

The above computer-readable medium may be contained in the above electronic device or exist independently rather than being assembled into the electronic device.

The computer-readable medium carries one or more programs. When the one or more programs are executed by the electronic device, the electronic device is caused to implement the method shown in the above embodiments.

According to an aspect of the disclosure, a computer program product or a computer program is provided. The computer program product or the computer program includes computer instructions stored in a computer-readable storage medium. The processor of the computer device reads the computer instruction from the computer-readable storage medium, and the processor executes the computer instruction to cause the computer device to implement the methods provided in the above optional implementations.

The computer program codes for performing the operations of the disclosure may be written in one or more programming languages or combinations thereof. The above programming languages include object-oriented programming languages, such as Java, Smalltalk, and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on a remote computer or a server. In the case involving the remote computer, the remote computer may be connected to the user computer via any type of network, including a Local Area Network (LAN) or a Wide Area Network (WAN), or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the disclosure. At this point, each block in the flowcharts or block diagrams may represent a module, a program segment, or a portion of codes, which includes one or more executable instructions for implementing specified logical functions. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in a reverse order, depending on the function involved. It should also be noted that each of the blocks in the block diagrams and/or flowcharts, and any combination of blocks in the block diagrams and/or flowcharts, may be implemented with a specialized hardware-based system that performs the specified functions or operations, or may be implemented with a combination of specialized hardware and computer instructions.

The modules described in the embodiments of the disclosure may be realized through software or hardware. The name of a module does not constitute a limitation of the module itself in a certain case. For example, module A may also be described as "module A for performing an operation B".

Only some preferential embodiments of the disclosure and an explanation of the technical principles utilized herein are described above. It should be understood by those skilled in the art that the scope of disclosure involved in the disclosure is not limited to the technical solutions formed by a particular combination of the above technical features, but also covers other technical solutions formed by any combination of the above technical features or their equivalent features without departing from the above disclosed concept, for example, the technical solution formed by interchanging the above features with technical features with similar functions disclosed (but not limited to) in the disclosure.

## Claims

1. A communication method, performed by an access point multi-link device (AP MLD), comprising:
determining a first target wake-up time (TWT) setup frame, wherein the first TWT setup frame comprises one or more TWT elements; and
sending the first TWT setup frame in one communication link with a non-AP MLD, wherein each TWT element corresponds to one communication link.

2. The method of claim 1, further comprising:
sending a beacon frame and/or a probe response frame, wherein the beacon frame and/or the probe response frame comprises TWT parameters range support information;
wherein the TWT parameters range support information being set to a first parameter value indicates that the AP MLD supports for reception or transmission of at least two TWT elements.

3. The method of claim 2, wherein the TWT parameters range support information is carried in an extended capabilities field of the beacon frame and/or the probe response frame.

4. The method of claim 1, wherein the first TWT setup frame comprises a TWT setup frame action field; and
wherein the TWT setup frame action field comprising a second parameter value indicates that the first TWT setup frame comprises one or more TWT elements.

5. The method of claim 1, wherein the TWT element comprises first identification information; and
wherein the first identification information indicates whether the TWT element is a last TWT element of the first TWT setup frame.

6. The method of claim 5, wherein the first identification information is carried in a control field of the TWT element.

7. The method of claim 1, further comprising:
receiving a second TWT setup frame in one communication link with the non-AP MLD;
wherein the second TWT setup frame comprises one or more TWT elements, and each TWT element corresponds to one communication link.

8. The method of claim 1, wherein each TWT element comprises first link identity (ID) indication information, and the first link ID indication information indicates the communication link corresponding to the TWT element;
or,
wherein the first TWT setup frame comprises second link ID indication information, and each ID bit of the second link ID indication information indicates the communication link corresponding to each TWT element.

9. A communication method, performed by a non-access point multi-link device (non-AP MLD), comprising:
determining a second target wake-up time (TWT) setup frame, wherein the second TWT setup frame comprises one or more TWT elements; and
sending the second TWT setup frame in one communication link with an AP MLD, wherein each TWT element corresponds to one communication link.

10. The method of claim 9, further comprising:
sending an association request frame and/or a probe request frame, wherein the association request frame and/or the probe request frame comprises TWT parameters range support information;
wherein the TWT parameters range support information being set to a third parameter value indicates that the non-AP MLD supports for reception or transmission of at least two TWT elements.

11. The method of claim 10, wherein the TWT parameters range support information is carried in an extended capabilities field of the association request frame and/or the probe request frame.

12. The method of claim 9, wherein the second TWT setup frame comprises a TWT setup frame action field; and
wherein the TWT setup frame action field comprising a second parameter value indicates that the second TWT setup frame comprises one or more TWT elements.

13. The method of claim 9, wherein the TWT element comprises first identification information,
and the first identification information indicates whether the TWT element is a last TWT element of the second TWT setup frame.

14. The method of claim 13, wherein the first identification information is carried in a control field of the TWT element.

15. The method of claim 9, further comprising:
receiving a first TWT setup frame in one communication link with the AP MLD;
wherein the first TWT setup frame comprises one or more TWT elements, and each TWT element corresponds to one communication link.

16. The method of claim 9, wherein each TWT element comprises first link identity (ID) indication information, and the first link ID indication information indicates the communication link corresponding to the TWT element;
or,
wherein the second TWT setup frame comprises second link ID indication information, and each ID bit of the second link ID indication information indicates the communication link corresponding to each TWT element.

17. An electronic device, wherein the electronic device is an access point multi-link device (AP MLD), and comprises:
a first determining module, configured to determine a first target wake-up time (TWT) Setup frame, wherein the first TWT setup frame comprises one or more TWT elements; and
a first sending module, configured to send the first TWT setup frame in one communication link with a non-AP MLD, wherein each TWT element corresponds to one communication link.

18. An electronic device, wherein the electronic device is a non-access point multi-link device (non-AP MLD), and comprises:
a second determining module, configured to determine a second target wake-up time (TWT) Setup frame, wherein the second TWT setup frame comprises one or more TWT elements; and
a second sending module, configured to send the second TWT setup frame in one communication link with an AP MLD, wherein each TWT element corresponds to one communication link.

19. An electronic device, comprising a memory, a processor and a computer program stored on the memory and executable by the processor, wherein the processor implements the method according to any one of claims 1-8 or the method according to any one of claims 9-16 when executing the program.

20. A computer-readable storage medium, wherein the computer-readable storage medium stores a computer program, and the processor implements the method according to any one of claims 1-8 or the method according to any one of claims 9-16 when executing the computer program.
